# FASCICULE DE BREVET EUROPEEN

(11) **EP 1 282 675 B1**
(45) Date de publication et mention de la délivrance du brevet: **23.03.2005**
(21) Numéro de dépôt: 01929715.9
(22) Date de dépôt: 26.04.2001
(51) Int. Cl.: C09K 7/06, C10M 111/02, C10M 169/04, C10N 30/00

(54) **COMPOSITION LUBRIFIANTE BIODEGRADABLE ET SES UTILISATIONS, NOTAMMENT DANS UN FLUIDE DE FORAGE**
BIODEGRADABLE ABBAUBARE SCHMIERMITTELZUSAMMENSETZUNG UND IHRE VERWENDUNG, INSBESONDERE IN EINER BOHRFLÜSSIGKEIT
BIODEGRADABLE LUBRICATING COMPOSITION AND USES THEREOF, IN PARTICULAR IN A BORE FLUID

(30) Priorité: 03.05.2000 FR 0005632
(43) Date de publication de la demande: 12.02.2003
(73) Titulaire: TotalFinaElf France, 92800 Puteaux (FR)
(72) Inventeur: GENUYT, Bertrand, F-78000 Versailles (FR); JANSSEN, Michel, B-6001 Marcinelle (BE); REGUERRE, René, F-76620 Le Havre (FR); CASSIERS, Jan, B-2980 Zoersel (BE); BREYE, François, B-1861 Wolvertem (BE)
(74) Mandataire: Jolly, Jean-Pierre
(86) Numéro de dépôt international: PCT/FR2001/001281
(87) Numéro de publication internationale: WO 2001/083640

(56) Documents cités:
- EP-A- 0 386 636
- WO-A-95/06694
- WO-A-97/34963
- US-A- 5 958 845

## Description

La présente invention concerne une composition lubrifiante biodégradable, destinée de préférence à être incorporée comme phase huile à haut pouvoir lubrifiant dans un fluide ou boue de forage, cette composition comprenant en mélange une coupe minérale hydrocarbonée substantiellement exempte de composés aromatiques et un ester d'acides gras. L'invention concerne également l'utilisation de cette composition comme phase continue huile d'un fluide ou boue de forage pétrolier en émulsion inverse, qui convient particulièrement bien à des forages dits « offshore » en eau profonde, et/ou à des forages déviés ou à long déport.

Depuis toujours, certains chantiers, comme les grands travaux de génie civil, nécessitent de grandes quantités de lubrifiants, qui sont susceptibles d'être rejetés en partie dans l'environnement. C'est le cas, notamment, des fluides de forage.

Le forage a occupé une place primordiale dans l'exploitation pétrolière et, de nos jours, les forages sont de plus en plus profonds. Leur technologie évolue beaucoup, que ce soit sur terre ou dans les fonds marins, en particulier dans ce qui est appelé l'«offshore» profond, ou plus récemment dans les forages horizontaux ou déviés, où, par des inclinaisons successives d'un ou deux degrés, la trajectoire du puits s'incurve, ce qui permet d'atteindre des déports horizontaux au moins supérieurs à un kilomètre voire à plus de dix kilomètres, par rapport à la tête du puits. Les forces de frottement qui s'exercent sont donc de plus en plus importantes, d'où l'importance accrue des propriétés lubrifiantes du fluide de forage.

De façon connue, la technique de forage utilise un trépan fixé à l'extrémité de tiges de forage, qui, entraîné en rotation, creuse le puits en broyant les roches. A mesure de l'avancement du forage, des trépans de diamètre de plus en plus faibles sont utilisés et, à chaque étape le puits est consolidé par un tube en acier appelé « casing », qui est descendu à l'intérieur du trou, puis fixé par du ciment. Pendant le forage, un fluide de forage est mis en circulation, avec injection dans le trépan et expulsion de celui-ci dans la zone de contact avec la roche, puis remontée jusqu'au sommet du puits par le volume annulaire séparant les tiges de forage du «casing» .

Ce fluide remplit les fonctions principales suivantes :
- refroidissement du trépan,
- diminution des forces de frottement métal-métal, entre le « casing » et les tiges de forage, et des forces de frottement métal-roche, tant au niveau du trépan que dans la zone annulaire, car le fluide remonte chargé des particules de roche broyée, dites «cuttings» dans la technique,
- évacuation des déblais de roche vers l'extérieur,
- création d'une pression sur les parois du trou, pour empêcher leur affaissement, et
- équilibrage des pressions entre le fond du puits et la surface, afin de maintenir le contrôle du puits et d'éviter une explosion (en anglais, «blow out»).

Dans le cas des forages « offshore » en eau profonde, les températures de l'eau rencontrées, proches de 4 à 5°C, nécessitent une bonne maîtrise de la viscosité des fluides de forage à ces basses températures.

Différents types de fluides ou boues de forage ont été utilisés dans le passé, tels que les fluides à l'eau, contenant de l'eau et des additifs pour augmenter la viscosité, les fluides à l'huile, et les émulsions du type eau dans huile ou du type huile dans eau, comme décrit en particulier dans le brevet US N° 2.816.073. Celui-ci indique que la phase huile peut être constituée par différentes fractions hydrocarbonées, comme des coupes kérosène et gazoles et des coupes pétrolières fortement alkylées et ramifiées. Malheureusement, on sait que ces coupes pétrolières ont des teneurs souvent élevées en composés aromatiques, et leur utilisation s'est révélée présenter des risques élevés de toxicité, en particulier pour la vie marine, si l'on choisit leur rejet en mer, dans le cas des forages «offshore ».

Des coupes pétrolières à teneur réduite en composés aromatiques ont également été utilisées, mais elles restent peu biodégradables.

Le dépôt de quantités importantes de ces produits sur les fonds marins a conduit les pays riverains à adopter des législations de plus en plus strictes, obligeant les opérateurs des forages pétroliers « offshore » à rechercher des produits aussi biodégradables et non-toxiques que possible. C'est le cas, notamment, en mer du Nord.

Il a ainsi été proposé, dans le brevet EP N°0 667 890, un fluide de forage ayant une phase huile continue, qui est constituée d'un mélange de n-alcanes ayant entre 10 et 20 atomes de carbone, essentiellement exempt d'autres types d'hydrocarbures. On constate malheureusement que ce fluide a un point d'écoulement trop élevé pour une utilisation dans une zone à basse température (<5°C).

Il a été également proposé d'utiliser dans des fluides de forage en émulsion inverse, comme phase huile ou comme fraction prépondérante de la phase huile, des composés biodégradables, tels que des esters du type triglycérides d'acides gras d'origine végétale ou animale. Il s'est toutefois avéré que ces produits avaient l'inconvénient majeur d'être très sensibles à l'hydrolyse, ce qui entraîne des modifications indésirables de la viscosité des émulsions.

Aussi a-t-on cherché à développer d'autres esters moins sensibles. En particulier, ont été proposés des esters à base d'acides monocarboxyliques saturés (notamment en C12-C14) ou insaturés et d'alcools monofonctionnels, dont l'utilisation dans des boues de forage en émulsion inverse a été décrite, notamment, dans les brevets EP N° 0 374 671, 0 374 672 et 0 386 636. Toutefois, ces composés restent sensibles à l'hydrolyse, notamment dans les conditions de température élevée, en particulier supérieure à environ 160°C, rencontrées lors du forage dans la roche, dans les forages « offshore ». profonds.

D'autres composés synthétiques, tels que les PAO (polyalpha-oléfines) ou LAO (alpha-oléfines linéaires), obtenus par oligomérisation d'oléfines, peuvent également être utilisés, en mélange avec les composés précédents. Malheureusement, ces composés seuls présentent une très mauvaise biodégradabilité, en particulier anaérobique.En outre, l'utilisation de tous ces produits synthétiques augmente de façon considérable le prix de revient des fluides de forage ainsi formulés.

La Demanderesse a établi que, de façon surprenante, il est possible d'obtenir une composition lubrifiante, utilisable notamment comme phase huile d'un fluide de forage, présentant des propriétés rhéologiques et un pouvoir lubrifiant bien adaptés aux conditions sévères d'utilisation de ce fluide, tout en préservant sa biodégradabilité, en faisant appel à un mélange dans des proportions appropriées d'une coupe minérale hydrocarbonée pratiquement exempte de composés aromatiques et ayant une teneur particulière non usuelle en normales et iso-paraffines, et d'un ester d'acides gras.

Le but de la présente invention est donc de proposer des compositions hydrocarbonées réalisant un compromis satisfaisant entre le pouvoir lubrifiant, la viscosité et la biodégradabilité, et de valoriser des coupes minérales hydrocarbonées particulières, en les utilisant pour l'obtention d'une composition lubrifiante incorporée notamment comme phase huile dans un fluide de forage, à un coût optimum par rapport à celui des fluides à base d'huiles synthétiques.

A cet effet, la présente invention a pour objet une composition lubrifiante biodégradable, à base d'huile minérale hydrocarbonée et d'ester, caractérisée en ce qu'elle comprend une quantité majeure, comprise entre 95 et 60 % en poids, d'une coupe minérale hydrocarbonée substantiellement exempte de composés aromatiques, cette coupe possédant une teneur en normales-paraffines inférieure ou égale à 10 % en poids et une teneur en iso-paraffines supérieure ou égale à 35% en poids, et une quantité mineure, comprise entre 5 et 40% en poids, d'au moins un ester d'acide gras.

Les avantages apportés par une telle composition sont, d'une part des économies au niveau du prix de revient des fluides de forage formulés avec celle-ci et, d'autre part, le maintien à des niveaux relativement bas du point d'écoulement et de la viscosité cinématique à basse température (à moins de 5°C), tout en conservant un bon pouvoir lubrifiant et de bonnes propriétés de biodégradabilité.

De préférence, dans la composition lubrifiante selon l'invention, la coupe minérale est composée d'hydrocarbures possédant entre 13 et 16 atomes de carbone, présentant un intervalle de distillation compris entre 230 et 285 °C. En outre, elle présente avantageusement une teneur en composés aromatiques inférieure à 0,01% en poids.

Son point d'écoulement (selon la méthode NF T 60105) est avantageusement inférieur ou égal à -30 °C et, de préférence, inférieur ou égal à -50°C.

En particulier, la coupe minérale de la composition selon l'invention présente un point d'éclair (selon la méthode NF M 07019) supérieur ou égal à 100°C.

La coupe minérale possède également, de préférence, une viscosité cinématique à 40°C (selon la méthode NF T 60100) comprise entre 2,2 et 3 mm²/s et, encore plus avantageusement, inférieure à 2,5 mm²/s.

Dans une forme de mise en oeuvre préférée de l'invention, la coupe minérale présente un intervalle de distillation compris entre 230 et 265 °C, est composée d'hydrocarbures possédant entre 13 et 15 atomes de carbone, avec une teneur majoritaire en hydrocarbures en C 14, et possède un point d'écoulement de -51 °C.

L'ester de la composition lubrifiante conforme à l'invention peut être obtenu à partir d'acides monocarboxyliques saturés ou insaturés, comprenant essentiellement entre 8 et 24 atomes de carbone, et d'alcools monofonctionnels, ayant de 1 à 12 atomes de carbone, et/ou d'alcools polyfonctionnels, ayant de 2 à 6 atomes de carbone.

L'ester utilisé dans le cadre de l'invention, est de préférence obtenu à partir d'acides gras de colza et d'un alcool tel que le 2-éthyl hexanol.

Selon l'invention, l'ester est introduit dans la composition en une quantité comprise de préférence entre environ 10 et 30 % en poids.

La composition lubrifiante, selon l'invention, possède une viscosité cinématique à 40°C (selon la méthode NF T 60100) comprise entre 2 et 4,5 mm²/s.

La composition lubrifiante, telle que définie ci-dessus, possède un taux de biodégradabilité anaérobie supérieur à 30%, mesuré selon la norme ISO 11734.

Un second objet de l'invention concerne l'utilisation de la composition lubrifiante selon l'invention comme phase continue huile d'un fluide ou boue de forage en émulsion inverse, la phase huile représentant entre 60 et 90 % en volume du fluide de forage. Celui-ci contient également d'autres additifs usuels, tels que notamment des émulsifiants, des gélifiants et des alourdissants. Ce fluide de forage est particulièrement approprié pour des forages "offshore" en eau profonde.

Un autre objet de l'invention concerne l'utilisation de la composition lubrifiante selon l'invention, comme phase continue huile d'un fluide ou boue de forage en émulsion inverse, la phase huile représentant entre 60 et 90 % en volume du fluide de forage. Celui-ci contient aussi d'autres additifs usuels, tels que notamment des émulsifiants, des gélifiants et des alourdissants. Ce fluide de forage est particulièrement approprié pour des forages déviés ou à long déport.

Les coupes minérales hydrocarbonées utilisées dans l'invention sont en particulier des coupes gazoles, provenant du traitement par hydrocraquage de charges pétrolières, ces coupes gazoles ayant subi une étape d'hydrogénation poussée pour en éliminer les composés aromatiques, puis un fractionnement approprié. A titre d'exemples de réalisation, le Tableau 1 ci-après donne certaines caractéristiques de trois coupes A, B et C, utilisées dans le cadre de l'invention, comparativement à des coupes gazole désaromatisées usuelles D et E.

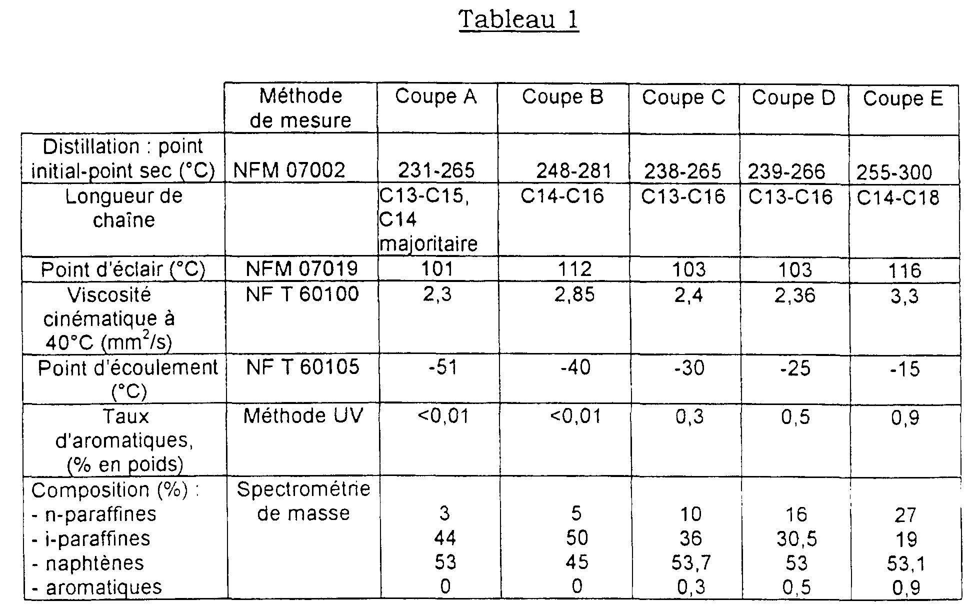

Les coupes gazole A, B et C, qui sont particulièrement appropriées à une utilisation dans la composition lubrifiante selon l'invention, du fait de la valeur de leur point d'écoulement qui est inférieur ou égal à -30°C, ont une teneur en n-paraffines fortement réduite (inférieure ou égale à 10 % en poids), une teneur en iso-paraffines élevée (supérieure ou égale à 36 % en poids), et une teneur en composés aromatiques très faible, par rapport à d'autres coupes gazole usuelles, telles que D et E.

Un autre avantage de l'utilisation d'une coupe étroite comme la coupe A, dont l'analyse chromatographique en phase gazeuse donne principalement un seul pic dominant en C14, est qu'il n'y a pas de contamination par l'huile de base contenant une telle coupe, rajoutée dans une boue de forage, lorsqu'on analyse par la même méthode chromatographique des échantillons de fluides provenant de l'opération de forage.

Comme indiqué ci-dessus les esters qui peuvent être utilisés pour obtenir la composition lubrifiante selon l'invention sont obtenus à partir d'acides monocarboxyliques saturés ou insaturés, comprenant essentiellement entre 8 et 24 atomes de carbone, et d'alcools monofonctionnels, ayant de 1 à 12 atomes de carbone, et/ou d'alcools polyfonctionnels, ayant de 2 à 6 atomes de carbone.

Comme esters obtenus à partir d'alcools monofonctionnels , on peut citer, en particulier, le cocoate de méthyle, l'oléate de méthyle, l'oléate d'isopropyle, l'oléate de n-butyle, l'oléate d'isobutyle, le stéarate d'isobutyle, le caprylate d'éthylhexyle, le caprate d'éthylhexyle, le cocoate d'éthylhexyle, l'oléate d'éthylhexyle, le linoléate d'éthylhexyle, l'adipate d'éthylhexyle, le sébaçate d'éthylhexyle, l'adipate de n-octyle, ou des mélanges de ces composés. Comme esters obtenus à partir d'alcools polyfonctionnels, on citera de préférence l'octanoate d'hexanediol, et le di 2-éthylhexanoate d'hexanediol.

Tous ces esters présentent des viscosités cinématiques à 40°C comprises entre 1 et 12 mm²/s (1 à 12 cSt).

Un ester utilisable avantageusement pour réaliser la composition lubrifiante est un mélange d'esters obtenus par réaction du 2-éthyl hexanol avec des acides gras extraits de l'huile de colza (dont, principalement, l'acide oléique et l'acide linoléique), qui est commercialisé sous le nom de Finagreen ® BDMF par la Société TOTALFINA.

Ses principales caractéristiques sont les suivantes :
- viscosité cinématique à 40°C: entre 6 et 8 mm²/s (selon la méthode DIN 51562),
- point d'écoulement : <-30°C (selon la méthode ASTM D97-87),
- point d'éclair :> 150°C (selon la méthode ASTM D92).

Il est connu que les coupes minérales hydrocarbonées fortement désaromatisées (notamment les gazoles) voient leur pouvoir lubrifiant diminuer. Aussi est-ce avec intérêt que l'on a constaté que l'introduction d'environ 30% en poids d'esters, tels que le Finagreen ® BDMF, dans les coupes A, B et C permet de réduire les forces de frottement des compositions lubrifiantes ainsi obtenues d'environ 30%.

Des mesures de variation de la viscosité cinématique en fonction de la température, d'une part, des coupes A et E, d'autre part, d'un mélange composé de 70% en poids de ces coupes et de 30 % en poids de l'ester Finagreen ® BDMF, sont présentées dans le Tableau 2.

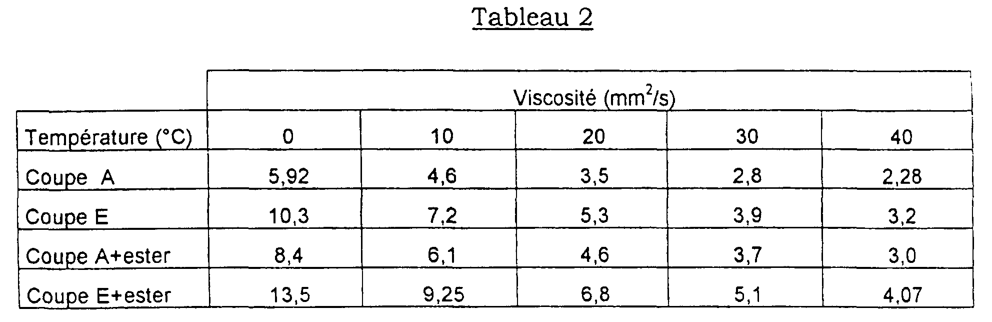

Ces valeurs indiquent que la viscosité du mélange Coupe A+ ester passe de 3 mm²/s à 40 °C à 8,4 mm²/s à 0°C. Ceci montre bien que le mélange selon l'invention possède des propriétés rhéologiques adaptées aux basses températures d'utilisation dans le forage en eaux profondes, puisque le seuil maximum de viscosité cinématique à la température de 0°C, pour une huile du fluide de forage, doit être inférieur à 10 mm²/s.

Par ailleurs, des essais de biodégradabilité anaérobie après 60 jours, selon la norme ISO 11734 (qualité de l'eau-évaluation de la biodégradabilité anaérobie «ultime» des composés organiques dans les boues de digesteurs), le pourcentage de dégradabilité étant exprimé successivement par comparaison avec une substance de référence, le benzoate de sodium, et avec de la cellulose, ont été réalisés sur des mélanges de la coupe minérale A et de l'ester Finagreen ® BDMF, ce dernier étant ajouté selon différents pourcentages.

Les résultats sont présentés dans le Tableau 3 ci-après.

**Tableau 3**

| % d'ester dans le mélange | % de biodégradabilité/benzoate de sodium | % de biodégradabilité/cellulose |
|---|---|---|
| 10 | 24 | 38,5 |
| 30 | 32 | 51,4 |
| 50 | 38 | 61 |
| 100 | 60 | 96,3 |

Pour plus de clarté, les résultats rassemblés dans les Tableaux 2 et 3 sont illustrés par les dessins annexés, sur lesquels :

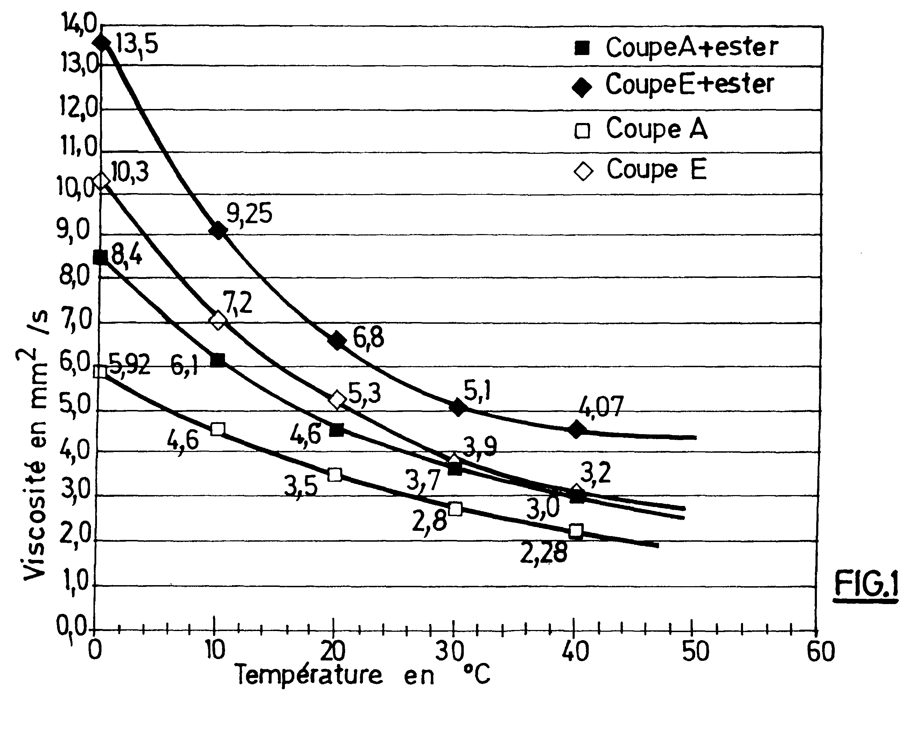

La figure 1 présente un ensemble de courbes, illustrant les variations de la viscosité en fonction de la température ressortant du Tableau 2 ;
La figure 2 présente des courbes illustrant les résultats de biodégradabilité anaérobie du Tableau 3.

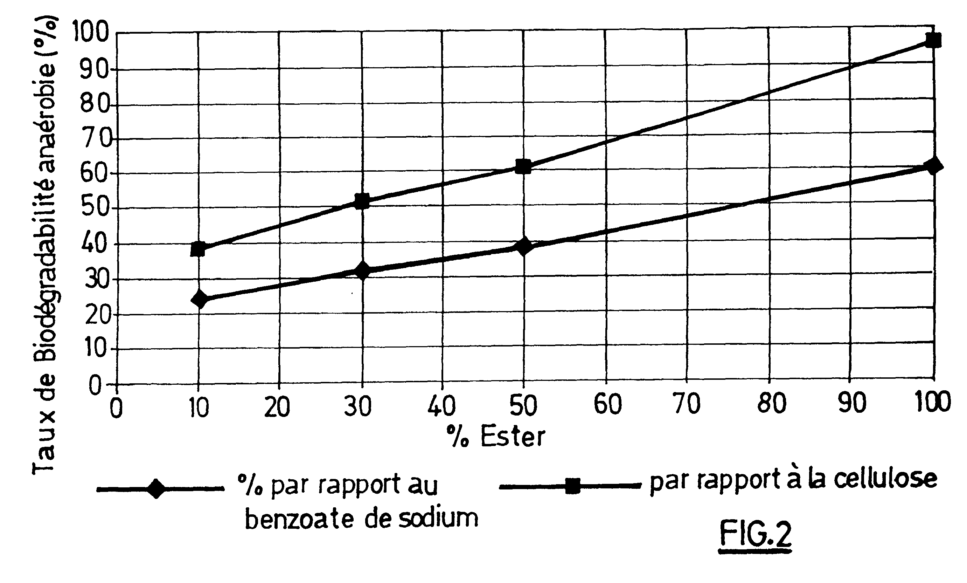

Sur cette figure 2, la courbe supérieure représente le pourcentage de conversion de la composition lubrifiante comparé à la cellulose et la courbe inférieure se rapporte au pourcentage de conversion comparé au benzoate de sodium.

On constate qu'en introduisant 30% d'ester dans le mélange avec la coupe minérale, on obtient un taux de biodégradabilité de 32 %, qui est sensiblement la moitié de celui de l'ester pur, mais qui est bien supérieur à celui de la coupe minérale pure (environ 6 %).

En-dessous d'environ 5% d'ester dans le mélange, le taux de biodégradabilité de la composition est inférieur à 20 %, ce qui est trop faible.

Au-delà d'environ 30% d'ester dans le mélange, c'est le prix de revient trop élevé d'une telle composition qui la rend moins attractive.

A titre d'exemple d'utilisation de la composition lubrifiante selon l'invention, comme phase continue huile d'un fluide ou boue de forage en émulsion inverse, pour forage « offshore » en eaux profondes, une formulation de boue appropriée est la suivante :
- Composition lubrifiante : 500 à 600 ml,
- Emulsifiant 1 : 20 à 30 ml,
- Emulsifiant 2 : 10 à 20 ml,
- Saumure : 250 à 300 ml,
- Chaux: 5 à 15 g,
- Gélifiant : 10 à 20 g,
- Alourdissant : 100 à 600 g.

On peut également envisager d'utiliser cette composition lubrifiante dans une boue de forage à l'eau, dans laquelle elle est introduite en une quantité de 5 % en volume.

## Revendications

1. Composition lubrifiante biodégradable, à base d'huile minérale hydrocarbonée et d'ester, **caractérisée en ce qu'**elle comprend une quantité majeure, comprise entre 95 et 60 % en poids, d'une coupe minérale hydrocarbonée substantiellement exempte de composés aromatiques, cette coupe possédant une teneur en normales-paraffines inférieure ou égale à 10% en poids et une teneur en iso-paraffines supérieure ou égale à 35 % en poids, et une quantité mineure comprise entre 5 et 40% en poids d'au moins un ester d'acide gras.

2. Composition lubrifiante, selon la revendication 1, **caractérisée en ce que** la coupe minérale est composée d'hydrocarbures possédant entre 13 et 16 atomes de carbone, présentant un intervalle de distillation compris entre 230 et 285 °C.

3. Composition lubrifiante selon l'une des revendications 1 et 2, **caractérisée en ce que** la coupe minérale possède une teneur en composés aromatiques inférieure à 0,01 % en poids.

4. Composition lubrifiante selon l'une des revendications 1 à 4, **caractérisée en ce que** la coupe minérale présente un point d'écoulement (selon la méthode NF T 60105) inférieur ou égal à -30 °C et, de préférence, inférieur ou égal à -50°C.

5. Composition lubrifiante selon l'une des revendications 1 à 3, **caractérisée en ce que** la coupe minérale présente un point d'éclair (selon la méthode NF M 07019) supérieur ou égal à 100°C .

6. Composition lubrifiante selon l'une des revendications 1 à 5, **caractérisée en ce que** la coupe minérale possède une viscosité cinématique à 40°C (selon la méthode NF T 60100) comprise entre 2 et 4,5 mm²/s et, de préférence, inférieure ou égale à 2,5 mm²/s.

7. Composition lubrifiante selon l'une des revendications 1 à 6, **caractérisée en ce que** la coupe minérale présente un intervalle de distillation compris entre 230 et 265 °C, est composée d'hydrocarbures possédant entre 13 et 15 atomes de carbone, avec une teneur majoritaire d'hydrocarbures en C14, et possède un point d'écoulement de -51°C.

8. Composition lubrifiante selon l'une des revendications précédentes, **caractérisée en ce que** l'ester est obtenu à partir d'acides monocarboxyliques saturés ou insaturés, comprenant essentiellement entre 8 et 24 atomes de carbone, et d'alcools monofonctionnels ayant de 1 à 12 atomes de carbone, et/ou d'alcools polyfonctionnels, ayant de 2 à 6 atomes de carbone.

9. Composition lubrifiante selon la revendication 8, **caractérisée en ce que** l'ester est obtenu à partir d'acides gras de colza et d'un alcool tel que le 2-éthyl hexanol.

10. Composition lubrifiante selon l'une des revendications précédentes, **caractérisée en ce que** l'ester est introduit dans la composition en une quantité comprise entre environ 10 et 30 % en poids.

11. Composition lubrifiante selon l'une des revendications précédentes, **caractérisée en ce qu'**elle possède une viscosité cinématique à 40°C (selon la méthode NF T 60100) comprise entre 2-2 et 3 mm²/s.

12. Composition lubrifiante, selon l'une des revendications précédentes, **caractérisée en ce qu'**elle possède un taux de biodégradabilité anaérobie supérieur à 30% (selon la norme ISO 11734).

13. Utilisation de la composition lubrifiante selon l'une des revendications précédentes comme phase continue huile d'un fluide ou boue de forage, en émulsion inverse, notamment de boues de forages "offshore" en eau profonde, la phase huile représentant entre 60 et 90 % en volume du fluide de forage, celui-ci contenant également d'autres additifs usuels, tels que notamment des émulsifiants, des gélifiants et des alourdissants.

14. Utilisation de la composition lubrifiante selon l'une des revendications 1 à 12, comme phase continue huile d'un fluide ou boue de forage en émulsion inverse, notamment de boues de forages déviés ou à long déport, la phase huile représentant entre 60 et 90 % en volume du fluide de forage, celui-ci contenant également d'autres additifs usuels, tels que notamment des émulsifiants, des gélifiants et des alourdissants.

## Patentansprüche

1. Bioabbaubare Schmiermittelzusammensetzung auf der Basis eines mineralischen Kohlenwasserstofföls und eines Esters, **dadurch gekennzeichnet, dass** sie eine Hauptmenge von 95 bis 60 Gewichts-% einer mineralischen Kohlenwasserstoffmischung, die im Wesentlichen frei von aromatischen Verbindungen ist, wobei diese Mischung einen Gehalt an normalen (n-) Paraffinen von weniger oder gleich 10 Gewichts-% und einen Gehalt an iso-Paraffinen von mehr oder gleich 35 Gewichts-% besitzt, sowie eine Nebenmenge von 5 bis 40 Gewichts-% mindestens eines Fettsäureesters umfasst.

2. Schmiermittelzusammensetzung gemäß Anspruch 1, **dadurch gekennzeichnet, dass** die mineralische Mischung sich aus Kohlenwasserstoffen zusammensetzt, die 13 bis 16 Kohlenstoffatome aufweisen und einen Destillationsbereich von 230 bis 285°C zeigen.

3. Schmiermittelzusammensetzung gemäß einem der Ansprüche 1 und 2, **dadurch gekennzeichnet, dass** die mineralische Mischung einen Gehalt an aromatischen Verbindungen von weniger als 0,01 Gewichts-% aufweist.

4. Schmiermittelzusammensetzung gemäß einem der Ansprüche 1 bis 4, **dadurch gekennzeichnet, dass** die mineralische Mischung einen Stockpunkt (gemäß der Methode aus NF T 60105) von weniger oder gleich -30°C und vorzugsweise weniger oder gleich - 50°C zeigt.

5. Schmiermittelzusammensetzung gemäß einem der Ansprüche 1 bis 3, **dadurch gekennzeichnet, dass** die mineralische Mischung einen Zündpunkt (gemäß der Methode NF M 07019) von mehr oder gleich 100°C zeigt.

6. Schmiermittelzusammensetzung gemäß einem der Ansprüche 1 bis 5, **dadurch gekennzeichnet, dass** die mineralische Mischung eine kinematische Viskosität bei 40°C (gemäß der Methode NF T 60100) von 2 bis 4,5 mm²/s und vorzugsweise von weniger oder gleich 2,5 mm²/s aufweist.

7. Schmiermittelzusammensetzung gemäß einem der Ansprüche 1 bis 6, **dadurch gekennzeichnet, dass** die mineralische Mischung einen Destillationsbereich von 230 bis 265°C zeigt, sich aus Kohlenwasserstoffen mit 13 bis 15 Kohlenstoffatomen zusammensetzt, mit einem Hauptgehalt an C14-Kohlenwasserstoffen, und einen Stockpunkt von -51°C aufweist.

8. Schmiermittelzusammensetzung gemäß einem der vorangehenden Ansprüche, **dadurch gekennzeichnet, dass** der Ester erhalten wurde, ausgehend von gesättigten oder ungesättigten Monocarboxylsäuren, die im Wesentlichen 8 bis 24 Kohlenstoffatome umfassen, und monofunktionellen, 1 bis 12 Kohlenstoffatome aufweisenden Alkoholen und/oder polyfunktionellen, 2 bis 6 Kohlenstoffatome aufweisenden Alkoholen.

9. Schmiermittelzusammensetzung gemäß Anspruch 8, **dadurch gekennzeichnet, dass** der Ester erhalten wurde, ausgehend von Fettsäuren aus Raps und einem Alkohol wie 2-Ethylhexanol.

10. Schmiermittelzusammensetzung gemäß einem der vorangehenden Ansprüche, **dadurch gekennzeichnet, dass** der Ester in die Zusammensetzung in einer Menge von ungefähr 10 bis 30 Gewichts-% eingebracht ist.

11. Schmiermittelzusammensetzung gemäß einem der vorangehenden Ansprüche, **dadurch gekennzeichnet, dass** sie eine kinematische Viskosität bei 40°C (gemäß der Methode NF T 60100) von 2,2 bis 3 mm²/s aufweist.

12. Schmiermittelzusammensetzung gemäß einem der vorangehenden Ansprüche, **dadurch gekennzeichnet, dass** sie einen anäroben Bioabbaugrad von mehr als 30% (gemäß der Norm ISO 11734) aufweist.

13. Verwendung der Schmiermittelzusammensetzung gemäß einem der vorangehenden Ansprüche als kontinuierliche Ölphase eines Bohrfluids oder -schlamms in Umkehremulsion, insbesondere von "Tiefenwasser-"Offshore"-Bohrschlämmen, wobei die Ölphase 60 bis 90 Volumen-% des Bohrfluids darstellt, wobei Letzteres gleichwohl andere gewöhnliche Additive enthält, wie insbesondere Emulgatoren, Geliermittel und Schwermittel.

14. Verwendung der Schmiermittelzusammensetzung gemäß einem der Ansprüche 1 bis 12 als kontinuierliche Ölphase eines Bohrfluids oder -schlamms in Umkehremulsion, insbesondere von Schlämmen für gekrümmte oder auf lange Distanz versetzte Bohrungen, wobei die Ölphase 60 bis 90 Volumen-% des Bohrfluids darstellt, wobei Letzteres gleichfalls weitere gewöhnliche Additive enthält, wie insbesondere Emulgiermittel, Geliermittel und Schwermittel.

## Claims

1. A biodegradable lubricating composition which is hydrocarbon mineral-oil and ester based, **characterised in that** it comprises a major quantity, of between 95 and 60 % by weight, of a hydrocarbon mineral fraction substantially free of aromatic compounds, said fraction having a content of normal paraffins lower than or equal to 10 % by weight and a content of isoparaffins higher than or equal to 35 % by weight, and a minor quantity of between 5 and 40 % by weight of at least one fatty acid ester.

2. A lubricating composition according to claim 1, **characterised in that** the mineral fraction is composed of hydrocarbons having between 13 and 16 carbon atoms, having a distillation range of between 230 and 285°C.

3. A lubricating composition according to either of claims 1 and 2, **characterised in that** the mineral fraction has a content of aromatic compounds lower than 0.01. % by weight.

4. A lubricating composition according to any one of claims 1 to 3, **characterised in that** the mineral fraction has a flow point (according to the method NF T 60105) lower than or equal to -30°C and, preferably, lower than or equal to -50°C.

5. A lubricating composition according to any one of claims 1 to 3, **characterised in that** the mineral fraction has a flash point (according to the method NF M 07019) lower than or equal to 100°C.

6. A lubricating composition according to any one of claims 1 to 5, **characterised in that** the mineral fraction has a kinematic viscosity at 40°C (according to the method NF T 60100) of between 2 and 4.5 mm²/s and, preferably, lower than or equal to 2.5 mm²/s.

7. A lubricating composition according to any one of claims 1 to 6, **characterised in that** the mineral fraction has a distillation range of between 230 and 265°C, is composed of hydrocarbons having between 13 and 15 carbons, with a majority content of C14 hydrocarbons and has a flow point of -51°C.

8. A lubricating composition according to any one of the preceding claims, **characterised in that** the ester is obtained from saturated or unsaturated monocarboxylic acids, essentially comprising between 8 and 24 carbon atoms, monofunctional alcohols having from 1 to 12 carbon atoms and/or polyfunctional alcohols having 2 to 6 carbon atoms.

9. A lubricating composition according to claim 8, **characterised in that** the ester is obtained from fatty acids of rapeseed and an alcohol, such as 2-ethyl hexanol.

10. A lubricating composition according to any one of the preceding claims, **characterised in that** the ester is introduced into the composition in a quantity of between about 10 and 30 % by weight.

11. A lubricating composition according to any one of the preceding claims, **characterised in that** it has a kinematic viscosity at 40°C (according to the method NF T 60100) of between 2.2 and 3 mm²/s.

12. A lubricating composition according to any one of the preceding claims, **characterised in that** it has a rate of anaerobic biodegradability higher than 30 % (according to the standard ISO 11734).

13. Use of the lubricating composition according to any one of the preceding claims as continuous oil phase of a drilling fluid or mud, in inverse emulsion, in particular deep water "offshore" drilling muds, the oil phase representing between 60 and 90 % by volume of drilling fluid, the latter also containing other conventional additives, such as in particular emulsifiers, gelling agents and weighting agents.

14. Use of the lubricating composition according to any one of claims 1 to 12 as continuous oil phase of a drilling fluid or mud, in inverse emulsion, in particular muds for deflected or substantially offset drilling, the oil phase representing between 60 and 90 % by volume of drilling fluid, the latter also containing other conventional additives, such as in particular emulsifiers, gelling agents and weighting agents.
